# EUROPÄISCHE PATENTANMELDUNG

(11) **EP 3 095 897 A1**
(43) Veröffentlichungstag der Anmeldung: **23.11.2016**
(21) Anmeldenummer: 16169369.2
(22) Anmeldetag: 12.05.2016
(51) Int. Cl.: D01G 27/00

(54) **ANTRIEBSVORRICHTUNG EINER TEXTILVORBEREITUNGSMASCHINE ZUR HERSTELLUNG VON WATTEEWICKELN**

(30) Priorität: 21.05.2015 CH 7052015
(71) Anmelder: MASCHINENFABRIK RIETER AG, 8406 Winterthur (CH)
(72) Erfinder: KELLER, Felix, 9535 Wilen bei Wil (CH); SCHLÄPFER, Willi, 8320 Fehraltorf (CH)

(57) **Zusammenfassung**

Die Erfindung bezieht sich auf eine Antriebsvorrichtung einer Vorbereitungsmaschine (1) zur Herstellung von Wattewickeln (W) mit einem Doppelwellenmotor (M), dessen erste Ausgangswelle (W1) in ein Getriebe (G) mündet, welches über Antriebsmittel (G1, G2) mit einem Wickelaggregat (WA) und dem Wickelaggregat vorgeschalteten Kalanderwalzen (A1-A4) verbunden ist und die zweite Ausgangswelle (W2) des Doppelwellenmotor (M) über wenigstens einen, mit einem, über Riemenscheiben (R1, R2) geführten Antriebsriemen (E1) versehen ersten Riementrieb (B1), mit einer Zwischenwelle eines Zuführtisches (T) verbunden ist, welche über weitere Antriebsmittel (G3) mit wenigstens einer, in parallelen Abstand zur Zwischenwelle angebrachten Ausgangswalze (20) eines Streckwerks (SW) verbunden ist. Um eine kostengünstige Antriebslösung zu erhalten, wird vorgeschlagen, dass zwischen der zweiten Ausgangswelle (W2) des Doppelwellenmotors (M) und einer ersten Riemenscheibe (R1) des ersten Riementriebs (B1), welche auf einer, in parallelem Abstand zur zweiten Ausgangswelle (W2) drehbar gelagerten Welle (17) befestigt ist, wenigstens ein weiteres Antriebsmittel (B2) vorgesehen ist, welches die Drehrichtung der zweiten Ausgangswelle (W2) zur ersten Riemenscheibe (R1) umkehrt und das Getriebe (G) eine gerade Anzahl von Getriebestufen (SG) aufweist.

## Beschreibung

Antriebsvorrichtung einer Vorbereitungsmaschine zur Herstellung von Wattewickeln (W) mit einem Doppelwellenmotor, dessen erste Ausgangswelle in ein Getriebe mündet, welches über Antriebsmittel mit einem Wickelaggregat und dem Wickelaggregat vorgeschalteten Kalanderwalzen verbunden ist und die zweite Ausgangswelle des Doppelwellenmotor über wenigstens einen, mit einem, über Riemenscheiben geführten Antriebsriemen versehen ersten Riementrieb, mit einer Zwischenwelle eines Zuführtisches verbunden ist, welche über weitere Antriebsmittel mit wenigstens einer, in parallelen Abstand zur Zwischenwelle angebrachten Ausgangswalze eines Streckwerks verbunden ist.

Der Einsatz derartiger Doppelwellenmotoren bei Textilmaschinen ist bereits bekannt. So wird z.B. in der DE 10 2013 103 177 A1 ein Doppelwellenmotor gezeigt, wobei eine erste Ausgangswelle Aggregate antreibt, welche einem Streckwerk vorgelagert sind, während die zweite Ausgangswelle die Walzen des Streckwerks antreibt.

Ebenso sind Ausführungen bekannt, wobei auf einer Seite des Doppelwellenmotors direkt eine mechanische Getriebeeinheit befestigt ist, in welche eine der Ausgangswellen des Doppelwellenmotors mündet. Über die vorhandenen Getriebestufen wird die Ausgangsdrehzahl des Doppelwellenmotors entsprechend moduliert und den nachfolgenden, anzutreibenden Aggregaten angepasst. Je nach Anzahl der Getriebestufen wird die Drehrichtung der Ausgangswelle des Doppelwellenmotors beibehalten oder gekehrt.

Es sind bereits Vorbereitungsmaschinen zur Herstellung eines Wattewickels für die nachfolgende Verarbeitung auf einer Kämmmaschine bekannt, wobei derartige Doppelwellenmotoren eingesetzt werden, welche im Bereich einer der Ausgangswellen eine Getriebeeinheit mit einer ungeraden Anzahl von Getriebestufen aufweist. Dadurch liegen unterschiedliche Drehrichtungen zwischen einer ersten Ausgangswellen des Doppelwellenmotors und einer Ausgangswelle, einer auf dem Doppelwellenmotor befestigten Getriebeeinheit vor, in welcher die zweite Ausgangswelle des Doppelwellenmotors mündet.

Nachteilig dieser Anordnung ist, dass derartige Doppelwellenmotoren mit einem angeflanschten Getriebe mit einer ungeraden Anzahl (z.B. drei) von Getriebestufen eine grosse Bauweise aufweisen und als Spezial-Motoren ausgeführt sind, welche relativ teuer sind. Einziger Vorteil durch den Einsatz solcher Motoren ist, dass der Antrieb einer Zwischenwelle auf dem Zuführtisch zur Wickelbildenden Vorrichtung über einen einfachen Riementrieb erfolgen kann.

Der Erfindung liegt somit die Aufgabe zugrunde, eine Antriebsvorrichtung für eine Vorbereitungsmaschine zur Herstellung von Wattewickeln vorzuschlagen, welche die zuvor genannten Nachteile beseitigt und den Einsatz von standardisierten, kostengünstigen Serie Motoren ermöglicht.

Zur Lösung der Aufgabe wird daher vorgeschlagen, dass zwischen der zweiten Ausgangswelle des Doppelwellenmotors und einer ersten Riemenscheibe des ersten Riementriebs, welche auf einer, in parallelem Abstand zur zweiten Ausgangswelle drehbar gelagerten Welle befestigt ist, wenigstens ein weiteres Antriebsmittel vorgesehen ist, welches die Drehrichtung der zweiten Ausgangswelle zur ersten Riemenscheibe umkehrt und das Getriebe eine gerade Anzahl von Getriebestufen aufweist.
Die zweite Riemenscheibe des ersten Riementriebs ist dabei direkt auf der Zwischenwelle befestigt.
Es können vorzugsweise zwei Getriebestufen des Getriebes vorgesehen sein. Damit kann das Getriebe klein, kompakt und einer hohen Stabilität ausgebildet werden. Dadurch weisst die Ausgangswelle des am Doppelwellenmotor angeflanschten Getriebes die gleiche Drehrichtung auf, wie auch die zweite Ausgangswelle des Doppelwellenmotors, welche in das Getriebe mündet. Die gleiche Drehrichtung wie die Ausgangswelle des Getriebes weisst auch die erste Ausgangswelle des Doppelwellenmotors auf, welche auf der gegenüberliegenden Stirnseite des Motors liegt. Durch den vorgeschlagenen Einsatz eines weiteren Antriebsmittels zwischen der ersten Ausgangswelle des Doppelwellenmotors und einer ersten Riemenscheibe eines ersten Riementriebes wird die Drehrichtung der ersten Ausgangswelle bei der Antriebsübertragung zur ersten Riemenscheibe gekehrt, so dass die Drehrichtung der nachfolgenden Zwischenwelle des Zuführtisches in der erforderlichen Form vorliegt. Damit ist es möglich, die Antriebsvorrichtung des Zuführtisches unverändert beizubehalten.

Des Weiteren wir vorgeschlagen, dass das wenigstens weitere Antriebsmittel aus einem Doppelzahnriemenrieb besteht, dessen Doppelzahnriemen mit seiner Innenverzahnung eine, mit der zweiten Ausgangswelle verbundene erste Zahnriemenscheibe teilweise umschlingt und über seine Aussenverzahnung auf einem Teilbereich des Umfanges einer zweiten Zahnriemenscheibe aufliegt, welche koaxial auf einer Welle der ersten Riemenscheibe des ersten Riementriebs angebracht ist und in radialem Abstand zur Welle der ersten Riemenscheibe eine Spannrolle auf einer Achse drehbar gelagert ist, wobei die Innenverzahnung des Doppelzahnriemens die Spannrolle teilweise umschlingt.
Durch den weiteren Vorschlag, dass auf der Welle der ersten Riemenscheibe eine lösbare Kupplung angebracht ist, über welche die erste Riemenscheibe mit zweiten Zahnriemenscheibe antriebsmässig verbindbar ist, wird eine einfache Trennung zwischen dem Doppelwellenmotor und den angetriebenen Aggregaten des Einlauftisches ermöglicht. Eine solche Trennung ist z.B. bei der Durchführung eines Wickelausstosses notwendig. Das heisst, über die Kupplung ist die erste Riemenscheibe drehest mit der drehbar gelagerten Welle verbunden, auf welcher drehfest die zweite Zahnriemenscheibe des Doppelzahnriementriebes angebracht ist.

Vorzugsweise ist die Kupplung eine pneumatische Kupplung, welcher ein Sensor zur Überwachung der Betriebsstellung zugeordnet ist. Damit kann in einfacher Weise ein unbeabsichtigtes Anfahren der Wickelbildenden Vorrichtung vermieden werden, wenn der Antrieb zum Zuführtisch noch unterbrochen ist.
Der Doppelzahnriemen kann mit seinem ziehenden Trum oder seinem gezogenen Trum auf der zweiten Zahnriemenscheibe aufliegen.
Um beim Auswerfen des fertigen Wattewickels den Antrieb zu den Kalanderwalzen unterbrechen zu können, wird weiter vorgeschlagen, dass zwischen der Getriebestufe der zweiten Welle des Motors und den Kalanderwalzen eine pneumatische Kupplung vorgesehen ist, welcher ein Sensor zur Überwachung ihrer Betriebsstellung zugeordnet ist, Dies ist insbesondere für den Abriss der Wattebahn am Ende des fertig gestellten Wattewickels notwendig.
Zum Zweck einer einfachen Vormontage und Montage im Maschinengestell der Vorbereitungsmaschine wird weiter vorgeschlagen, dass die Welle der ersten Riemenscheibe mit der darauf angebrachten zweiten Zahnriemenscheibe und die Achse der Spannrolle auf einem, am Maschinengestell demontierbar befestigten Lagerelement angebracht sind.
Um den Doppelzahnriemen spannen zu können, wird vorgeschlagen, dass die Achse der Spannrolle quer zu ihrer Längsrichtung verstellbar am Lagerelement angebracht ist.

Vorzugsweise besteht das Wickelaggregat aus einem über Rollen geführten, umlaufenden Riemen, wobei wenigstens eine der Rollen mit dem Doppelwellenmotor antriebsverbunden ist.
Des Weiteren wird vorgeschlagen, dass auch die am Zuführtisch drehbar gelagerten Kalanderwalzen über Antriebsmittel mit der Zwischenwelle (ZW) verbunden sind. Diese Kalanderwalzen sind jeweils im Anschluss an die vorhandenen Streckwerkseinheiten angebracht, und dienen neben der Kalandrierung zur Transportunterstützung der Wattebahnen auf dem Zuführtisch.
Weitere Vorteile werden anhand nachfolgender Ausführungsbeispiele gezeigt und beschrieben.

Es zeigen:
- Fig.1: einer schematische Seitenansicht einer bekannten Ausführungsform einer Antriebsvorrichtung einer Wickel bildenden Vorbereitungsmaschine
- Fig.2: eine schematische Draufsicht (Teilansicht) nach Fig.1
- Fig.3: eine schematische Seitenansicht nach Fig.1 mit einem erfindungsgemäss vorgeschlagenen zusätzlichen Antriebsmittel
- Fig.3a: eine Ausführungsvariante nach Fig.3
- Fig.4: eine Ansicht X (Teilansicht) nach Fig.3
- Fig.5: eine schematische Draufsicht nach Fig.3

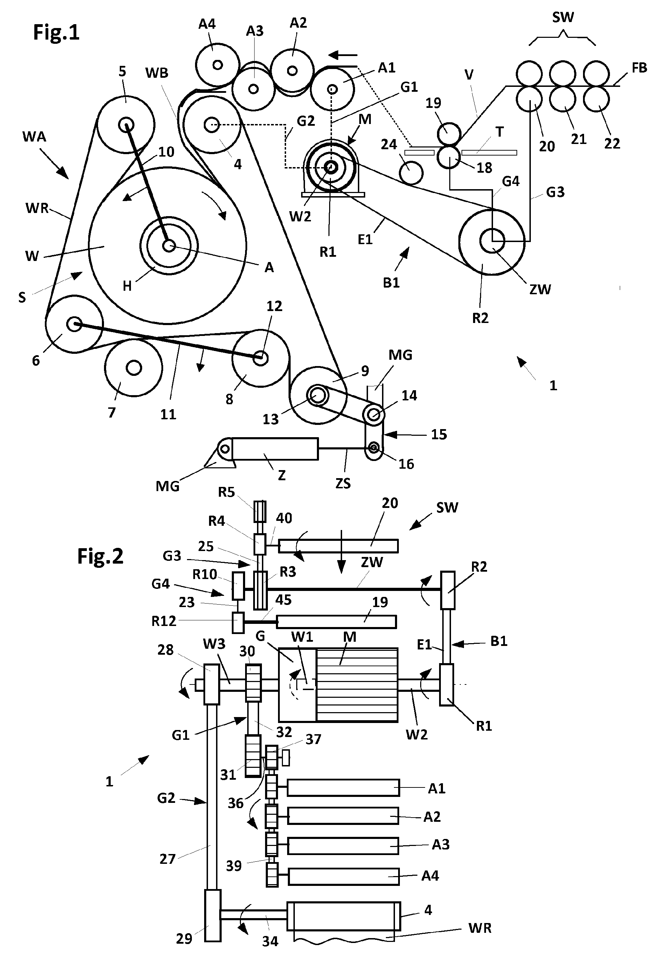

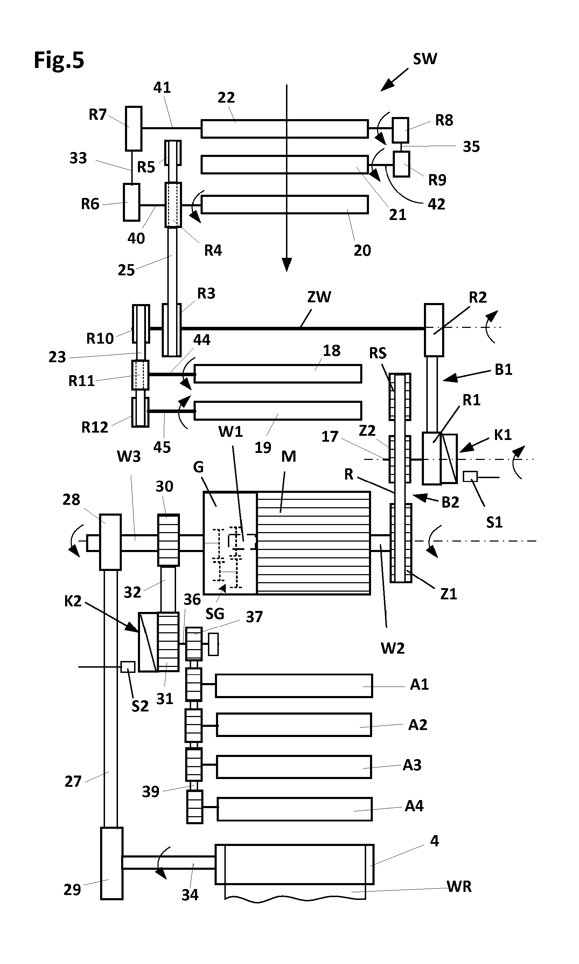

Fig.1 zeigt eine schematische Seitenansicht einer Vorbereitungsmaschine 1 zur Bildung von Wattewickeln W (kurz "Wickel" genannt), welche für die Weiterverarbeitung auf nachfolgenden Kämmmaschinen benötigt werden. Wie bereits aus der Vorveröffentlichung EP 1 675 976B1 bekannt, wird in einem Wickelaggregat WA ein Wickel W in einer Schlaufe S eines umlaufenden Riemens WR durch aufwickeln einer Wattebahn WB auf eine drehbar gelagerte Hülse H hergestellt. Dabei wird der Riemen WR über Umlenkrollen 4 bis 9 geführt, wobei die Umlenkrolle 9 als schwenkbare Spannrolle ausgebildet ist. Die auf einer Achse 13 drehbar gelagerte Umlenkrolle 9 ist über einen Doppelschwenkarm 15 um eine am Maschinengestell MG befestigte Schwenkachse 14 schwenkbeweglich gelagert. Am anderen Ende des Doppelschwenkarmes 15 ist über eine Achse 16 eine Zylinderstange ZS eines Zylinders Z angebracht, welcher sich am Maschinengestell MG abstützt. Über die Spannrolle 9 (Umlenkrolle) wird der Riemen WR beim Aufwickelvorgang gespannt und in Anlage auf dem anwachsenden Aussenumfang des Wickels W gehalten.
Um den fertig gebildeten Wickel W auszustossen, sind die Umlenkrollen 5 und 6 über die Arme 10, bzw. 11 schwenkbar um die Achse A, bzw.12 angeordnet. Bevor die Wattebahn WB in die Schlaufe S der Wickelbildenden Vorrichtung WA eingeführt wird, wird sie durch eine Anzahl von hintereinander angeordneten Kalanderwalzen A1 bis A4 geführt, wobei sie verdichtet und für den Wickelvorgang vorbereitet wird.
Der Wickelbildenden Vorrichtung WA und den Kalanderwalzen A1-A4 ist ein schematisch angedeuteter Zuführtisch T vorgelagert. Oberhalb des Zuführtisches T ist eines, von wenigstens zwei Streckwerken SW gezeigt, welchem eine Vielzahl von Faserbändern FB für den Verstreckungsvorgang zugeführt werden. Das jeweilige Streckwerk SW weist hintereinander, im Abstand angeordnete Walzenpaare auf, dessen Unterwalzen (Ausgangswalze 20, Mittelwalze 21 und Eingangswalze 22) angetrieben werden. Der Antrieb der Ausgangswalze 20 erfolgt von schematisch angedeuteten Antriebsmitteln G3 aus, welche in Fig.2 näher gezeigt werden. Der Antrieb für die Walzen 21 und 22 erfolgt von der Ausgangswalze 20 aus über nicht näher gezeigte weitere Antriebsmittel. Die oberhalb dieser Walzen angebrachten Druckwalzen werden über Friktion von den Unterwalzen angetrieben.
Die Faserbänder FB werden aus nicht gezeigten, am Zuführtisch T bereit gestellten Kannen abgezogen und über entsprechende Führungen dem jeweiligen Streckwerk SW zugeführt.
Die an den Streckwerken SW gebildeten Faservliese V werden auf dem Zuführtisch T aufeinandergelegt und den Kalanderwalzen A1-A4 zugeführt. Dieser Vorgang wird unterstützt durch im Bereich des Zuführtisches T drehbar angebrachte und angetrieben Kalanderwalzen 18, 19 (auch Tischkalander genannt). Der Antrieb der Kalanderwalzen 18, 19 erfolgt über schematisch dargestellte Antriebsmittel G4, welche für die Kalanderwalze 19 teilweise in Fig.2 gezeigt werden.
Wie aus der Fig. 2 zu entnehmen, erfolgt im vorliegenden Beispiel der Antrieb der verschiedenen Aggregate der Vorbereitungsmaschine 1 von einem Doppelwellenmotor M (kurz "Motor" genannt) aus. Eine erste Ausgangswelle W1 des Motors M mündet in ein Getriebe G, das im vorliegenden Beispiel mit einer ungeraden Anzahl von Getriebestufen (z. B. drei Getriebestufen) ausgestattet ist. D. h., die Drehrichtung (wie schematisch durch einen Pfeil angedeutet) der Ausgangswelle W1, welche eine Eingangswelle im Getriebe G bildet, wird in Bezug zur Ausgangswelle W3 des Getriebes G umgekehrt, bzw. gedreht. Dabei weist das Getriebe G im vorliegenden Beispiel eine ungerade Anzahl (z. B. drei) von Getriebestufen auf. Der Antrieb der Umlenkrolle 4 und somit des Riemens WR der Wickelbildenden Vorrichtung WA und der Antrieb der Kalanderwalzen A1-A4 erfolgt über entsprechende Antriebsmittel G1, bzw. G2 von der Ausgangswelle W3 aus.
Wie aus Fig.2 zu entnehmen, erfolgt der Antrieb der Umlenkrolle 4 über eine auf der Ausgangswelle W3 angebrachte Riemenscheibe 28 die über einen Riemen 27 mit einer Riemenscheibe 29 verbunden ist, welche auf einer Welle 34 der Umlenkrolle 4 angebracht ist.
Des Weiteren ist auf der Ausgangswelle W3 eine Zahnriemenscheibe 30 befestigt, die über einen Zahnriemen 32 mit einer Zahnriemenscheibe 31 antriebsverbunden ist.
Die Zahnriemenscheibe 31 ist auf einer drehbar gelagerten Welle 36 angebracht, auf welcher noch eine weitere Zahnriemenscheibe 37 befestigt ist. Diese Zahnriemenscheibe 37 steht über einen Zahnriemen 39 mit weiteren Zahnriemenscheiben in Antriebsverbindung, welche auf Achsen der Kalanderwalzen A1-A4 angebracht sind. Für nähere Details dieser Antriebsführung wird auf die Veröffentlichung der DE-10323130B4 hingewiesen.
Die zweite Ausgangswelle W2 des Motors M weist im vorliegenden Beispiel eine entgegengesetzte Drehrichtung (durch Pfeil gekennzeichnet) in Bezug auf den Ausgangswelle W3 auf. Daher erfolgt der Antrieb einer, im Bereich des Zuführtisches T drehbar angebrachten Zwischenwelle ZW direkt über einen ersten Riementrieb B1. Von einer, auf der Ausgangswelle W2 angebrachten ersten Riemenscheibe R1 aus erfolgt die Antriebsübertragung auf eine zweite, auf der Zwischenwelle ZW angebrachten zweiten Riemenscheibe R2 über einen Riemen E1. Schematisch angedeutet ist eine Spannrolle 24, über welche den Riemen E1 gespannt wird. Auf der Zwischenwelle ZW sind am gegenüberliegenden Ende Riemenscheiben R3 und R10 angebracht.
Von der Riemenscheibe R3 führt ein Riemen 25 zu einer Riemenscheibe R5. Auf dem Aussentrum des Riemens 25 (es kann z. B. ein Doppelzahnriemen sein) liegt eine Riemenscheibe R4 auf, welche teilweise vom Riemen 25 umschlungen wird. Die Riemenscheibe R4 ist auf einer Achse 40 der Ausgangswalze 20 angebracht. Der Antrieb der hier nicht gezeigten Mittelwalze 21 und Eingangswalze 22 kann entsprechend dem Ausführungsbeispiel nach Fig. 5 erfolgen.
Des Weiteren erfolgt der Antrieb der beispielhaft gezeigten Kalanderwalze 19 über die Riemenscheibe R10, welche über den Riemen 23 mit der Riemenscheibe R12 verbunden ist, die auf der Achse 45 der Kalanderwalze 19 befestigt ist. Der Antrieb der Kalanderwalze 18 kann entsprechend dem Ausführungsbeispiel nach Fig. 5 erfolgen.

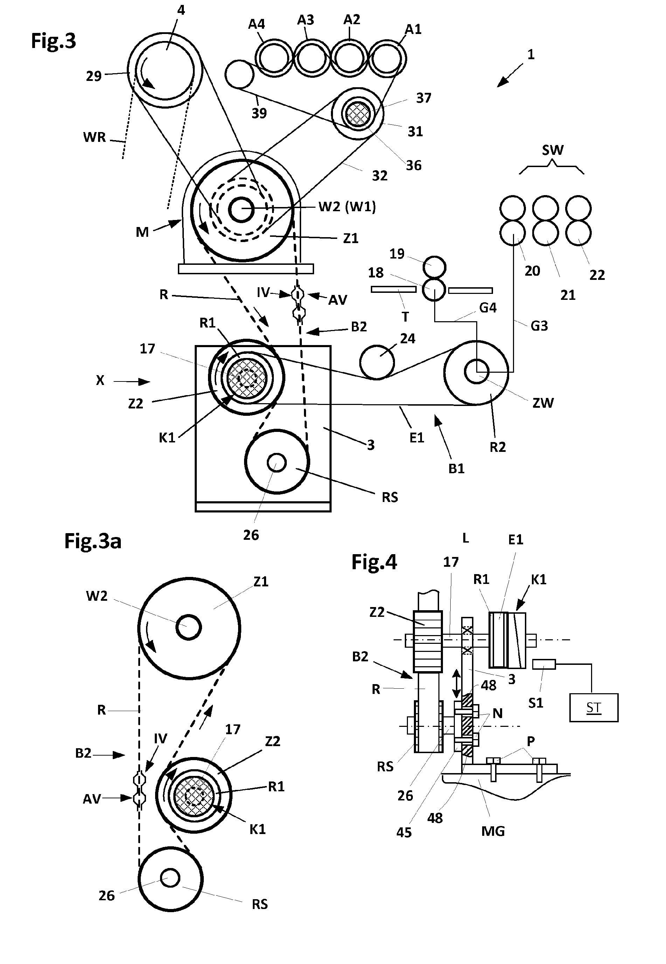

In Fig.5 wird ein Ausführungsbeispiel nach der Erfindung gezeigt, wobei zwischen dem Riementrieb B1 und der Ausgangswelle W2 ein zusätzlicher Riementrieb B2 angebracht ist, mittels welchem eine Umkehrung der Drehrichtung der Ausgangswelle W2 des Motors M in Bezug auf die Welle 17 erfolgt, auf welcher die erste Riemenscheibe R1 des ersten Riementriebes B1 angebracht ist. Mit dieser Umkehrung der Drehrichtung ist es möglich, das Getriebe G mit einer geraden Anzahl (z. B. zwei Stufen) von Getriebestufen SG auszubilden, so dass die erforderliche Drehrichtung für die nachfolgenden Aggregate (Umlenkrolle 4, Kalanderwalzen A1-A4) vorliegt. Damit kann ein Doppelwellenmotor mit einem serienmässigen und gängigen Getriebe G eingesetzt werden, das einerseits preisgünstig ist und andererseits eine kompakte und stabile Ausführung gewährleistet. Der Antrieb der Umlenkrolle 4 für den Riemen WR des Wickelaggregates WA und der Antrieb der Kalanderwalzen A1-A4 erfolgt von der Welle W3 aus, wie bereits zum Ausführungsbeispiel der Fig.2 beschrieben wurde. Einziger Unterschied ist die Anbringung einer z. B. pneumatischen Kupplung K2 auf der Welle 36, über welche eine feste Antriebsverbindung zwischen der Zahnriemenscheibe 31 und der Welle 36 hergestellt oder unterbrochen werden kann. Bei dieser Ausführung ist die Zahnriemenscheibe 31 drehbar auf der Welle 31 gelagert. Zur Überwachung der Betriebsstellung der Kupplung K2 ist ein Sensor S2 angebracht, welcher mit der zentralen Steuerung ST verbunden ist. Die Kupplungen K1 und K2 werden insbesondere zur Trennung der Antriebsmittel vom Motor M des Bereiches des Zuführtisches T und der Kalanderwalzen A1-A4 eingesetzt, wenn ein Ausstoss eines fertigen Wattewickels W vorgenommen wird. D. h. um das Ende der Wattebahn des fertigen Wickels von der zugeführten Wattebahn zu trennen, wird kurzzeitig nur die Umlenkrolle 4 angetrieben, während die anderen Aggregate über die geöffneten Kupplungen K1, K2 von Motor M abgekoppelt sind. Weitere Einzelheiten über den Wickelausstoss können aus bereits bekannten Vorveröffentlichungen entnommen werden und werden hier nicht weiter ausgeführt.
Die Sensoren S1 und S2 haben auch eine Überwachungsfunktion hinsichtlich des Betriebszustandes der Antriebsvorrichtung. Damit soll ein fehlerhaftes Anfahren und Stoppen der Antriebsvorrichtung vermieden werden, was durch die zentrale Steuerung ST überwacht wird.
Wie aus Fig.3 zu entnehmen, weist der zusätzliche Riementrieb R2 einen Doppelzahnriemen R auf der von einer Zahnriemenscheibe Z1 angetrieben wird, welche auf der Ausgangswelle W2 befestigt ist. Des Weiteren umschlingt der Doppelzahnriemen R teilweise eine, in radialem Abstand zur Ausgangswelle W2 auf einer Achse 26 (Fig.4) drehbar gelagerte Spannrolle RS. Wie aus der Teilansicht der Fig.4 zu entnehmen ist, ist die Achse 26 auf einer Platte 45 befestigt, welche über Schrauben N an einem Lagerelement 3 lösbar befestigt ist. Die L-förmig ausgebildete Lagerelement 3 ist über Schrauben am Maschinengestell MG der Vorbereitungsmaschine 1 befestigt. Um den Doppelzahnriemen R zu spannen, ist die Spannrolle RS parallel verschiebbar zur Ausgangswelle W2 auf der dem Lagerelement 3 angebracht. Dazu sind im Lagerelement 3 Langlöcher 48 vorgesehen, durch welche die Schrauben N hindurchragen. Nach dem Lösen der Schrauben N kann die Spannrolle RS, wie durch einen Doppelpfeil gekennzeichnet, entlang des Lagerelementes verschoben werden, um den Riemen R zu spannen. Oberhalb der Spannrolle RS ist im Lagerelement 3 über das Lager L eine Welle 17 drehbar gelagert, auf welcher an einem Ende eine Zahnriemenscheibe Z2 befestigt ist, welche mit einem Teilbereich ihrer Verzahnung in die Aussenverzahnung AV des Zahnriemens R eingreift. Im Beispiel der Fig.3 erfolgt dieser Eingriff im Bereich des gezogenen Teiles des Zahnriemens R, während im Ausführungsbeispiel nach Fig.3a dieser Eingriff im Bereich des ziehenden Teiles des Zahnriemens erfolgt. Beide Varianten sind möglich, wobei die Kraftübertragung der Ausführung nach Fig.3a etwas besser ist.

Auf dem anderen Ende der Welle 17 ist eine Kupplung K1 (z.B. pneumatische) angebracht. Der auskuppelbare Teil der Kupplung K1 ist mit der Riemenscheibe R1 verbunden, welche drehbar auf der Welle17 gelagert ist. D.h. über die geschlossene Kupplung K1 ist die Riemenscheibe R1 fest mit der Welle 17 verbunden. Um den Zustand (geschlossen oder offen) der Kupplung K1 zu überwachen, ist ein Sensor S1 vorgesehen, welche mit einer Steuerung ST verbunden ist.
Durch die Anbringung der Achse 26 und der Welle 17 am Lagerelement 3 ist es möglich das Lagerelement 3, mit der Zahnriemenscheibe Z2, der Spannrolle RS, der Kupplung K1 mit dem Sensor S1 und der Riemenscheibe R1 als Baugruppe auszubilden, welche vormontiert und dann im Maschinengestell MG komplett befestigt werden kann.
Über den Riemen E1 wird die Riemenscheibe R2 des ersten Riementriebes B1 angetrieben. Zur Spannung des Riemens E1 ist eine verschiebbar angebrachte Spannrolle 24 vorgesehen.
Die Riemenscheibe R2 ist an einem Ende einer Zwischenwelle ZW, welche (nicht gezeigt) drehbar an einem Zuführtisch T der Vorbereitungsmaschine 1 gelagert ist. Am anderen Ende der Zwischenwelle ZW sind Riemenscheiben R3 und R10 drehfest angebracht. Von der Riemenscheibe R10 wird über einen Riemen 23 eine Riemenscheibe R12 angetrieben, die auf einer Achse 45 einer, drehbar am Zuführtisch T gelagerten Kalanderwalze 19 befestigt ist. Über eine nicht gezeigt Spannvorrichtung wird eine Riemenscheibe R11 auf dem Aussentrum des Riemens 23 in Anlage gehalten. Über die Riemenscheibe R11, welche auf einer Achse 44 einer drehbar gelagerten Kalanderwalze 18 befestigt ist, wird die Kalanderwalze 18 in umgekehrter Drehrichtung zur Kalanderwalze 19 angetrieben, wie durch Pfeile schematisch angedeutet wird. Zwischen der Klemmstelle der Kalanderwalzen 18, 19 wird das von den Streckwerken SW (in der Regel zwei) gelieferte Faservlies V auf dem Zuführtisch kalandriert und in Richtung der nachfolgenden Kalanderwalzen A1 bis A4 transportiert.
Über einen Riemen 25 stehen die Riemenscheiben R3 und R5 in Antriebsverbindung mit der Zwischenwelle ZW. Um die durch einen Pfeil gezeigte, benötigte Drehrichtung der Ausgangswalze 20 des Streckwerks SW zu erhalten, ist auf einer Achse 40 der Ausgangswalze 20 eine Riemenscheibe R4 befestigt, welch unter einer entsprechenden Anpresskraft auf dem Aussentrum des Riemens 25 aufliegt. Um einen Schlupf zwischen der Riemenscheibe R4 und dem Riemen 25 zu vermeiden, ist es möglich den Riemen 25 als Doppelzahnriemen auszubilden, wobei die Riemenscheiben R3, R4 und R5 als Zahnriemenscheiben ausgeführt wären.
Von der ebenfalls drehfest auf der Achse 40 angebrachten Riemenscheibe R6 wird über einen Riemen 33 eine Riemenscheibe R7 angetrieben, welche drehfest auf einer Achse 41 einer drehbar gelagerten Eingangswalze 22 des Streckwerks SW angebracht ist. Am gegenüberliegenden Ende der Achse 41 ist eine Riemenscheibe R8 befestigt über welch über einen Riemen 35 der Antrieb auf eine Riemenscheibe R9 übertragen wird. Die Riemenscheibe R9 sitzt drehfest auf einer Achse 42 einer drehbar gelagerten Mittelwalze 21 des Streckwerks SW. Auf die Darstellung eines weiteren Streckwerkes, wurde verzichtet. Der Antrieb für ein weiteres Streckwerk kann direkt von der Zwischenwelle ZW erfolgen oder von der Achse 40 des gezeigten Streckwerks SW erfolgen.
Mit der erfindungsgemäss vorgeschlagenen Antriebsvorrichtung, insbesondere mit dem zusätzlichen Antriebsmittel zur Drehrichtungsumkehr zwischen der zweiten Ausgangswelle W2 des Doppelwellenmotors M und eines, mit einer Zwischenwelle des Zuführtisches T verbundenen ersten Riementriebes B1, erhält man einen kompakte und einfache Antriebsvorrichtung, bei welcher standartmässige Antriebselemente, wie z. B. ein standartmässiger Doppelwellenmotor mit geradzahliger Getriebeeinheit einsetzbar sind.

## Patentansprüche

1. Antriebsvorrichtung einer Vorbereitungsmaschine (1) zur Herstellung von Wattewickeln (W) mit einem Doppelwellenmotor (M), dessen erste Ausgangswelle (W1) in ein Getriebe (G) mündet, welches über Antriebsmittel (G1, G2) mit einem Wickelaggregat (WA) und dem Wickelaggregat vorgeschalteten Kalanderwalzen (A1-A4) verbunden ist und die zweite Ausgangswelle (W2) des Doppelwellenmotor (M) über wenigstens einen, mit einem, über Riemenscheiben (R1, R2) geführten Antriebsriemen (E1) versehen ersten Riementrieb (B1), mit einer Zwischenwelle eines Zuführtisches (T) verbunden ist, welche über weitere Antriebsmittel (G3) mit wenigstens einer, in parallelen Abstand zur Zwischenwelle angebrachten Ausgangswalze (20) eines Streckwerks (SW) verbunden ist,
**dadurch gekennzeichnet, dass** zwischen der zweiten Ausgangswelle (W2) des Doppelwellenmotors (M) und einer ersten Riemenscheibe (R1) des ersten Riementriebs (B1), welche auf einer, in parallelem Abstand zur zweiten Ausgangswelle (W2) drehbar gelagerten Welle (17) befestigt ist, wenigstens ein weiteres Antriebsmittel (B2) vorgesehen ist, welches die Drehrichtung der zweiten Ausgangswelle (W2) zur ersten Riemenscheibe (R1) umkehrt und das Getriebe (G) eine gerade Anzahl von Getriebestufen (SG) aufweist.

2. Antriebsvorrichtung nach Anspruch 1, **dadurch gekennzeichnet, dass** das wenigstens weitere Antriebsmittel (B2) aus einem Doppelzahnriemenrieb besteht, dessen Doppelzahnriemen (R) mit seiner Innenverzahnung (IZ) eine, mit der zweiten Ausgangswelle (W2) verbundene erste Zahnriemenscheibe (Z1) teilweise umschlingt und über seine Aussenverzahnung (AZ) auf einem Teilbereich des Umfanges einer zweiten Zahnriemenscheibe (Z2) aufliegt, welche koaxial auf der Welle (17) der ersten Riemenscheibe (R1) des ersten Riementriebs (B1) angebracht ist und in radialem Abstand zur Welle (17) der ersten Riemenscheibe (R1) eine Spannrolle (SR) auf einer Achse (26) drehbar gelagert ist, wobei die Innenverzahnung (IV) des Doppelzahnriemens (R) die Spannrolle (RS) teilweise umschlingt.

3. Antriebsvorrichtung nach Anspruch 1, **dadurch gekennzeichnet, dass** auf der Welle (17) der ersten Riemenscheibe (R1) eine lösbare Kupplung (K1) angebracht ist, über welche die erste Riemenscheibe (R1) mit zweiten Zahnriemenscheibe (Z2) antriebsmässig verbindbar ist.

4. Antriebsvorrichtung nach Anspruch 2, **dadurch gekennzeichnet, dass** die Kupplung (K1) eine pneumatische Kupplung ist, welcher ein Sensor (S1) zur Überwachung der Betriebsstellung zugeordnet ist.

5. Antriebsvorrichtung nach einem der vorhergehenden Ansprüche, **dadurch gekennzeichnet, dass** der Doppelzahnriemen (R) mit seinem ziehenden Trum auf dem Teilbereich der zweiten Zahnriemenscheibe (Z2) aufliegt.

6. Antriebsvorrichtung nach einem der Ansprüche 1 bis 4, **dadurch gekennzeichnet, dass** der Doppelzahnriemen (R) mit seinem gezogenen Trum auf dem Teilbereich der zweiten Zahnriemenscheibe (Z2) aufliegt.

7. Antriebsvorrichtung nach einem der vorhergehenden Ansprüche, **dadurch gekennzeichnet, dass** zwischen der Getriebestufe (G) der zweiten Welle (W2) des Doppelwellenmotors (M) und den Kalanderwalzen (A1 - A4) eine pneumatische Kupplung (K2) vorgesehen ist, welcher ein Sensor (S2) zur Überwachung ihrer Betriebsstellung zugeordnet ist.

8. Antriebsvorrichtung nach einem der vorhergehenden Ansprüche, **dadurch gekennzeichnet, dass** die Welle (17) der ersten Riemenscheibe (R1) mit der darauf angebrachten zweiten Zahnriemenscheibe (Z2) und die Achse (26) der Spannrolle (SR) auf einem, am Maschinengestell (MG) demontierbar befestigten Lagerelement (3) angebracht sind.

9. Antriebsvorrichtung nach Anspruch 7, **dadurch gekennzeichnet, dass** die Achse (26) der Spannrolle (RS) quer zu ihrer Längsrichtung verstellbar am Lagerelement (3) angebracht ist.

10. Antriebsvorrichtung nach einem der vorhergehenden Ansprüche, **dadurch gekennzeichnet, dass** das Wickelaggregat (WA) aus einem über Rollen (4 - 9) geführten, umlaufenden Riemen (WR) besteht, wobei wenigstens eine der Rollen (4) mit dem Doppelwellenmotor (M) antriebsverbunden ist.

11. Antriebsvorrichtung nach einem der vorhergehenden Ansprüche, **dadurch gekennzeichnet, dass** das Getriebe (G) zwei Getriebestufen aufweist.

12. Antriebsvorrichtung nach einem der vorhergehenden Ansprüche, **dadurch gekennzeichnet, dass** am Zuführtisch drehbar gelagerte Kalanderwalzen (18, 19) über Antriebsmittel (G4) mit der Zwischenwelle (ZW) verbunden sind.

13. Vorbereitungsmachine zur Herstellung von Wattwickeln mit einer Antriebsvorrichtung nach einem der vorhergehenden Ansprüche.
